# EUROPÄISCHE PATENTSCHRIFT

(11) **EP 1 377 424 B1**
(45) Veröffentlichungstag und Bekanntmachung des Hinweises auf die Patenterteilung: **22.02.2006**
(21) Anmeldenummer: 02701142.8
(22) Anmeldetag: 08.03.2002
(51) Int. Cl.: B29C 43/34, B29C 31/04, B29C 43/52

(54) **VERFAHREN ZUM AUSFORMEN VON THERMOPLASTISCHEM KUNSTSTOFF**
METHOD OF SHAPING THERMOPLASTIC MATERIAL
PROCEDE DE FORMAGE DE MATIERE THERMOPLASTIQUE

(30) Priorität: 19.03.2001 EP 01810274
(43) Veröffentlichungstag der Anmeldung: 07.01.2004
(73) Patentinhaber: PackSys Global (Switzerland) Ltd., 3414 Oberburg (CH)
(72) Erfinder: FANKHAUSER, Urs, CH-3414 Oberburg (CH)
(74) Vertreter: Roshardt, Werner Alfred
(86) Internationale Anmeldenummer: PCT/CH2002/000142
(87) Internationale Veröffentlichungsnummer: WO 2002/074514

(56) Entgegenhaltungen:
- EP-A- 0 328 096
- EP-B- 0 728 064
- PATENT ABSTRACTS OF JAPAN vol. 1997, no. 05, 30. Mai 1997 (1997-05-30) & JP 09 012734 A (AKEBONO BRAKE IND CO LTD), 14. Januar 1997 (1997-01-14)

## Beschreibung

### Technisches Gebiet

Die Erfindung betrifft ein Verfahren zum Ausformen von thermoplastischem Kunststoff zwischen zwei Formpresselementen und einer Vorrichtung dazu.

### Stand der Technik

Formpressen ist ein seit langem bekanntes Mittel, insbesondere Gegenstände aus einem thermoplastischen Material herzustellen. Beispielsweise werden Verschlüsse für Nahrungsmittel-Verpackungen hergestellt, insbesondere Kunststoffverschlüsse für Getränkeflaschen.

Damit der vorzugsweise thermoplastische Kunststoff verarbeitet werden kann, wird das Rohgranulat extrudiert und die gewünschte Menge abgeschnitten, welche auf ein Teil eines Formpresswerkzeugs deponiert wird. Anschliessend dringt ein zweites Formpresswerkzeug in das erste Formpresswerkzeug derart ein, dass das gewünschte Produkt geformt wird.

Aus der EP 0 328 096 A ist eine Vorrichtung zum Herstellen eines Tubenkopfes aus thermoplastischem Kunststoff bekannt. Aus einer Düse wird in einem Extruder erwärmtes thermoplastisches Kunststoffmaterial als ringförmiger Rohling ausgegeben. Axial zur Düse ist eine Formmatrize angeordnet, deren innere Form der Aussenform des herzustellenden Tubenkopfs entspricht. Zentral und axial ist zwischen zwei Anschlägen verschiebbar in der Formmatrize ein Zwischenträger angeordnet. In der durch den oberen Anschlag begrenzten Endstellung wird der Rohling direkt auf der Oberfläche des Zwischenträgers abgelegt.

Der Zwischenträger hat einen koaxial ausfahrbaren Stab, welcher über die Oberfläche herausragt und einerseits den Rohling mit ringförmigem Querschnitt zentriert und andererseits die Ausgabeöffnung für den Tubenkopf beim Pressen frei hält.

Die EP 0 728 064 B zeigt ein Verfahren zum Anformen eines aus Kunststoff bestehenden Tubenkopfes an ein Tubenrohr. Der linsenförmige Rohling wird auf dem Hilfsträger deponiert. Ein Formstift ist auf dem Hilfsträger mittig angeordnet und im Hilfsträger und in der Hilfsträgerstange beim Formgebungsvorgang verschiebbar gegen axialen Federdruck. Die Form umfasst einen formgebenden Teil, der von einem Teil der Stirnfläche des Hilfsträgers, der inneren Kontur, der Formbacken und dem Schulterformraum gebildet wird. Eine Ausnehmung in einem für die Führung des Hilfsträgers mit der Hilfsträgerstange dienenden Einsatz ist derart ausgebildet, dass der Hilfsträger in der untersten Stellung aufgenommen werden kann und dann die Stirnfläche den Formboden bildet.

Bei den bisher bekannten Verfahren tritt oft eine unkontrollierte Oberflächenstruktur auf, welche insbesondere materialtechnisch und ästhetisch unerwünscht ist. Vor allem bei Verschlüssen von Nahrungsmittelbehältern ist neben den funktionellen Eigenschaften die Ästhetik von wesentlicher Bedeutung.

### Darstellung der Erfindung

Aufgabe der Erfindung ist es, ein Verfahren und eine Vorrichtung zu schaffen, welche die Herstellung von Verschlüssen erlauben, insbesondere aus einer extrudierten Kunststoff-Rohmasse, ohne dass eine unkontrollierte Oberflächenstruktur an den Verschlüssen auftritt.

Die Lösung der Aufgabe ist durch die Merkmale des Anspruchs 1 definiert. Gemäss der Erfindung wird bei einem Verfahren zum Ausformen von thermoplastischem Kunststoff zwischen einem ersten und einem zweiten Formpresselement eine Portion Rohmasse auf einem Halter mit einer geringen Auflagefläche deponiert. Die Rohmasse auf der Auflagefläche weist einen Abstand zum einen Formpresselement auf und wird erst unmittelbar vor dem, beziehungsweise zu Beginn des Pressens an die Formpresselemente abgegeben.

Die Auflagefläche weist mindestens drei punktuelle Auflagen auf, welche durch Stifte gebildet sind, welche einen Boden des Formpresselementes durchdringen.

Die extrudierte Portion des Kunststoffs - auch Pellet genannt - weist eine Temperatur von etwa 180° Celsius auf. Die Formpresselemente haben dagegen eine um etwa 120° bis 150° niedrigere Betriebstemperatur. Im Rahmen der Erfindung wurde nun erkannt, dass der Zeitraum zwischen dem Deponieren der Portion und dem Ausformen kritisch für das Entstehen von unerwünschten Oberflächenveränderungen ist. Der flächige Kontakt vor dem Formen wird deshalb so kurz wie möglich gehalten, so dass "Verglasungseffekte" der Oberfläche vermieden werden können.

Wenn die Portion der extrudierten Kunststoffmasse auf dem ersten Formpresselement deponiert wird, liegt sie bei dem erfindungsgemässen Verfahren nicht vollständig auf diesem auf, sondern nur auf der geringen Auflagefläche des Halters. Dadurch, dass die Kontaktfläche zwischen dem Halter und dem Pellet so klein wie möglich gehalten wird, ist eine zu starke Abkühlung, insbesondere eine starke partielle Abkühlung, der extrudierten Kunststoff-Rohmasse vor dem Formpressvorgang nicht möglich. Der "Kälteschock" an der Kontaktfläche zum Halter ist derart klein, dass die beim Stand der Technik vorhandenen Auswirkungen weitgehend vermieden werden. Erst unmittelbar vor beziehungsweise zu Beginn des Pressens erfolgt der Kontakt des Pellets mit den Formpresselementen.

Der Halter stützt das Pellet nur punktuell. Je nach Konsistenz des Pellets weist der Halter eine Mehrzahl von punktuellen Auflageflächen auf. Der Halter wird in einer bevorzugten Ausführung des Verfahrens für die Übergabe beziehungsweise für die Freigabe für den Formpressvorgang versenkt, d. h. in das erste Formpresselement hineingezogen.

Der Halter kann auch aus mehreren Teilen bestehen, welche am Umfang des Formpresselements angeordnet sind. Weist das Formpresselement beispielsweise einen runden Querschnitt auf, können im Abstand von 120° drei einzelne Stäbe auf dem Umfang verteilt sein. Zur Aufnahme des Pellets werden diese einzelnen Stäbe vorzugsweise gleich weit zum Zentrum des Querschnitts des Formelements vorgeschoben, wobei sie sich nicht im Zentrum berühren müssen. Vor der Formpressung werden die Stäbe vorzugsweise bis über den Innenrand des Formpresselements zurückgezogen und das zuvor deponierte Pellet fällt auf das eine Formpresselement. Das zweite Formpresselement kann nun ungehindert in das-erste Formpresselement eindringen.

Insbesondere ist es vorteilhaft, wenn das Pellet durch den Halter zentriert wird. Die Zentrierung des Pellets erfolgt einerseits durch eine annähernd genaue Deponierung des Pellets auf dem Halter und anderseits durch die Ausgestaltung der Auflagefläche oder Auflagepunkte des Halters. Bei der Ausgestaltung des Halters mit mehr als zwei Auflageflächen, zentriert sich das Pellet infolge der Schwerkraft in einer bevorzugten Art auf dem Halter. Bevorzugt sind die mehreren Auflageflächen symmetrisch bezüglich dem Zentrum, beziehungsweise bezüglich der Mitte des Formpresselements angeordnet. Damit wird die Zentrierung des Pellets im Formpresselement erleichtert. Eine gleichmässige Verteilung der Masse wirkt sich in der Regel auf die Qualität der Produktion aus. Bei asymmetrischen Pressformen ist die Zentrierung hinfällig, es sei denn, es wird eine ganz bestimmte (zentrische oder exzentrische) Position angestrebt.

Da der Halter in einer bevorzugten Ausführungsform des Verfahrens vor oder während dem Formpressvorgang versenkt wird, erfolgt dieser Vorgang vorzugsweise gesteuert. Insbesondere eine kurvengesteuerte Bewegung des Halters ist für das Verfahren vorteilhaft, da so die Bewegung kontinuierlich erfolgt. Die Steuerung kann auch durch einen Sensor, beispielsweise einen optischen Sensor erfolgen, welcher entsprechend der Position des zweiten Formpresselements den Halter zurückfahren lässt.

Die erfindungsgemässe Vorrichtung umfasst ein erstes Formpresselement mit einem Halter und ein zweites Formpresselement, welches in das erste Formpresselement derart eindringt, dass ein Pellet - eine Portion extrudierte, thermoplastische Kunststoffmasse - zwischen diesen beiden Formpresselementen formgepresst wird. Der Halter weist eine geringe Auflagefläche für das Pellet auf und stützt dieses ab, bevor es mit dem ersten Formpresselement in Kontakt kommt.

Je nach Konsistenz des Pellets muss die Auflagefläche entsprechend ausgebildet sein. Wenn das Pellet eine Konsistenz aufweist, welche das Pellet kaum fliessen lässt, kann die Auflagefläche kleiner ausgebildet werden, als wenn das Pellet eher zum Fliessen neigt. Neben der Grösse kann auch die Form der Auflagefläche auf verschiedene Art gestaltet sein. Neben einer runden Ausgestaltung ist auch eine drei-, vier- oder mehreckige Ausgestaltung der Auflagefläche denkbar. Die Auflagefläche weist mindestens drei punktuelle Auflagen auf, welche durch Stifte gebildet sind, welche einen Boden des Formpresselementes durchdringen. Weiter ist auch eine zangenförmige Ausbildung des Halters denkbar.

Der Halter ist vorzugsweise im ersten Formpresselement versenkbar. Dazu weist das erste Formpresselement eine, entsprechend der Ausgestaltung des Halters ausgebildete, Ausnehmung oder gegebenenfalls auch mehrere solche Ausnehmungen auf. Da das fertige Produkt keine Vertiefungen infolge des Halters aufweisen sollte, ist die Ausnehmung im ersten Formpresselement so ausgestaltet, dass der gesamte Halter versenkbar ist. Besonders vorteilhaft ist es, wenn der Halter soweit im ersten Formpresselement versenkt wird, dass die Oberfläche des Halters - die Auflagefläche auf welcher das Pellet aufliegt - bündig mit der Oberfläche des Bodens des ersten Formpresselements zu liegen kommt.

Auf den Arbeitsablauf bezogen, ist ein zeitlich gesteuertes Bewegen des Halters bevorzugt. Eine solche Steuerung wird auf den Arbeitstakt der gesamten Herstellungsvorrichtung abgestimmt. Vorzugsweise senkt sich der Halter, sobald das zweite Formpresselement in das erste Formpresselement eindringt. Als Art der Steuerung bieten sich die bekannten Systeme an. Wenn die Steuerung des Halters kurvengesteuert erfolgt, wird der Halter über einen Mechanismus hin- und herbewegt, welcher entlang einer vorzugsweise gekrümmten Schiene beziehungsweise entlang einer vorbestimmten Kurvenbahn verläuft. Das zweite Formpresselement wird in einem solchen Fall vorzugsweise auch kurvengesteuert. Dabei können die beiden Steuerungen auch zu einer Steuerung zusammengefasst werden. Aus unterhaltstechnischen Gründen sind jedoch zwei aufeinander abgestimmte, jedoch mechanisch weitgehend unabhängige Steuerungen für den Halter und die Formpresselemente bevorzugt.

Neben der bevorzugten Kurvensteuerung kann der Halter beispielsweise auch druckgesteuert werden. Dabei misst ein Sensor den Druck auf den Halter. Sobald das zweite Formpresselement das Pellet berührt und somit der Druck auf den Halter zunimmt, wird dieser zurückgezogen und gibt das Pellet für den Formpressvorgang frei. Die Steuerung kann auch pneumatisch oder hydraulisch erfolgen.

Wie bereits erwähnt wurde, hängt die Ausgestaltung der Auflageflächen des Halters für das Pellet hauptsächlich von der Konsistenz des Pellets ab. Weiter ist es bevorzugt, wenn das Pellet deponiert und gleichzeitig auch zentriert werden kann. Insbesondere hat sich die Verwendung eines Halters mit drei Stiften bewährt. Durch die annähernd genaue Deponierung und die übliche Konsistenz des Pellets fliesst das Pellet auf den drei Stiften leicht nach und zentriert sich so selbst, was sich auf den Formpressvorgang positiv auswirkt und damit den Ausschuss bei der Produktion wesentlich reduziert. Der Querschnitt der Stifte kann beliebig ausgestaltet sein. In einer bevorzugten Ausführung des Halters ist der Querschnitt der Auflageflächen kreisrund.

Durch die Ausgestaltung des Halters mit einer Mehrzahl von Stiften können auch die entsprechend benötigten Ausnehmungen im ersten Formpresselement einfach ausgebildet werden. Da bei einem Halter die Anzahl von drei Stiften bevorzugt ist, werden im ersten Formpresselement Bohrungen beziehungsweise, entsprechend der Ausgestaltung der Stifte, Ausnehmungen angeordnet, welche minimal grösser sind als der Querschnitt eines Stiftes. Dadurch wird auch eine allfällige Verschmutzung der benötigten Ausnehmung minimiert und die Einsatzdauer wesentlich verlängert.

Der Halter bewegt sich, wie bereits erwähnt wurde, vorzugsweise axial im ersten Formpresselement. Die bevorzugte Ausgestaltung des Halters weist drei Stifte auf, welche auf einer Grundplatte angeordnet sind. Damit dieser Halter gesteuert werden kann, ist an der Grundplatte des Halters ein Stössel angeordnet, welcher in einer axialen Ausnehmung des ersten Formpresselements gelagert ist. Vorzugsweise ist an dem Ende des ersten Formpresselements, an welchem das Pellet verpresst wird, unter der eigentlichen Verpressfläche eine derart grosse axiale Ausnehmung angeordnet, dass die Grundplatte des Halters mit den Stiften versenkbar ist. Durch eine solche Ausgestaltung bleibt eine Trennschicht des ersten Formpresselements erhalten, durch welche nur die Stifte des Halters hindurchdringen. Weiter kann die Dicke der Trennschicht bei der Ausgestaltung der Ausnehmung für die Grundplatte mitberücksichtigt werden, da vorzugsweise die Oberkante der Stifte mit der Verpressfläche übereinstimmt.

Infolge des Einsatzes dieser Vorrichtung werden Mittel zum zeitlich gesteuerten Bewegen des Halters angeordnet. Vorzugsweise handelt es sich um kurvengesteuerte oder pneumatische Mittel.

Die Vorrichtung und somit die Formpresselemente sind insbesondere zum Ausformen von Kunststoffverschlüssen ausgebildet, wie sie für Getränkeflaschen zum Einsatz kommen. Das erste Formpresselement ist vorzugsweise unten angeordnet, dient als sogenannte Matrize und nimmt den Halter auf. Das zweite Formpresselement ist als Stempel ausgebildet und dringt in das erste Formpresselement ein.

Vorzugsweise wird zur Herstellung von formgepressten Produkten ein sogenannter Drehturm verwendet, der eine gesteuert rotierende Arbeitsplattform aufweist, welche mit einer Vielzahl von erfindungsgemässen Vorrichtungen ausgerüstet ist. Jede der angeordneten Vorrichtungen weist eine eigene Steuerung auf, wobei diese mit den Steuerungen der übrigen Vorrichtungen abgestimmt sind. Damit lassen sich hohe Verarbeitungsgeschwindigkeiten bei gleichzeitig hoher Präzision erreichen. Die Steuerung der einzelnen Teile, insbesondere des Halters, der Deponiervorrichtung und der zweiten Formpresselemente erfolgt bevorzugt zeitlich gesteuert. Vorzugsweise ist die Steuerung im Wesentlichen kurvengesteuert, was zu einem optimalen Bewegungsablauf der Produktion führt. Unter kurvengesteuert wird ein zeitlich gesteuerter Bewegungsablauf verstanden, welcher anhand einer vorgegebenen Kurve gesteuert wird. Dabei können die einzelnen Bewegungsabläufe mit einer gemeinsam genutzten Kurve gesteuert werden. Bevorzugt wird jedoch jeder einzelne Bewegungsablauf mit separaten Kurven gesteuert, welche aufeinander abgestimmt sind.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische, perspektivische Schnittdarstellung eines Formpresselements mit dem erfindungsgemässen Halter;
- Fig. 2a-c: anhand schematischer Schnitte das erfindungsgemässe Verfahren.

Grundsätzlich sind in den Figuren gleiche Teile mit gleichen Bezugszeichen versehen.

### Wege zur Ausführung der Erfindung

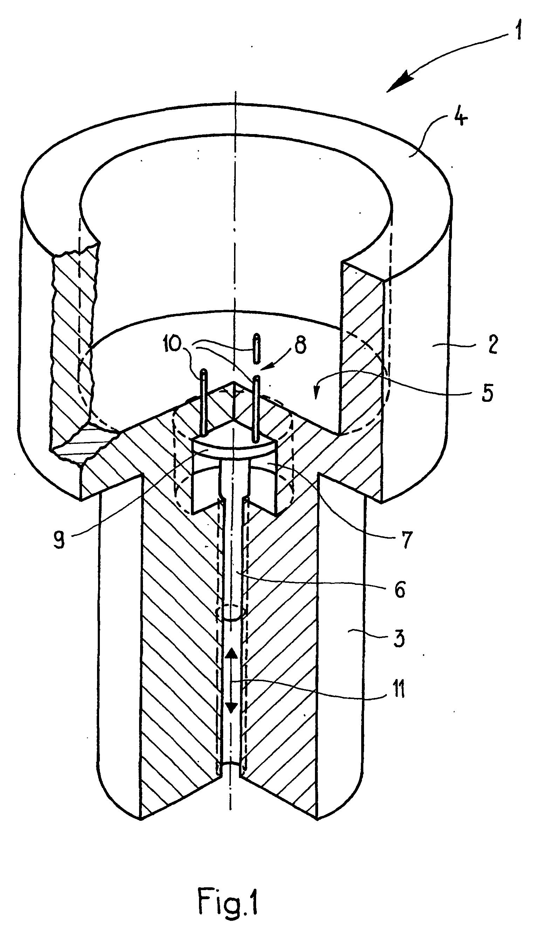

In Figur 1 ist eine schematische, perspektivische Schnittdarstellung eines Formpresselements mit dem erfindungsgemässen Halter gezeigt. In diesem Beispiel ist das erste Formpresswerkzeug 1 unten angeordnet, weshalb das zweite Formpresswerkzeug 14 von oben her in das erste Formpresswerkzeug 1 eindringt. Die Bezeichnungen oben und unten beziehen sich auf die dargestellte Zeichnung. Das erste Formpresswerkzeug 1 könnte auch oben angeordnet sein, was ein Eindringen des zweiten Formpresswerkzeugs 14 von unten her in das erste Formpresswerkzeug 1 bedingen würde.

Das erste Formpresswerkzeug 1 besteht aus einer Matrize 2 und einem Sockel 3. Die Matrize 2 ist in einer bevorzugten Ausführungsform ein Hohlzylinder 4 mit einem Boden 5. Die Matrize 2 ist die Negativform, welche die Aussengestaltung des Kunststoffverschlusses 16 bestimmt. Die Dicke des Bodens 5 der Matrize 2 ist annähernd gleich stark wie die Wandstärke des Hohlzylinders 4 ausgebildet. Der Sockel 3 ist mit der Matrize 2 verbunden. In dieser Ausführungsform ist der Sockel 3 als Zylinder ausgebildet. Die Dimensionen sind von dem herzustellenden Produkt und den damit verbundenen Belastungen abhängig. Für die Darstellung der Erfindung sind diese jedoch nicht von wesentlicher Bedeutung.

Im Sockel 3 ist in axialer Richtung eine Bohrung angeordnet, in welcher ein Stössel 6 in vertikaler Richtung (siehe Pfeil 11) hin- und herbewegt werden kann. Vorzugsweise wird eine Gleitschicht vorgesehen, beispielsweise eine Teflonbeschichtung, um die Reibung des Stössels 6 mit dem Sockel 3 weitgehend zu eliminieren. Bei der-imaginären Trennlinie zwischen der Unterkante des Bodens 5 und der Oberkante des Sockels 3 ist eine Ausnehmung 7 angeordnet. Die Grösse dieser Ausnehmung 7 ist von der Ausgestaltung des Halters 8 abhängig. Der Halter 8 besteht einerseits aus einer Grundplatte 9 und drei Stiften 10, welche an der Grundplatte 9 befestigt sind. Die Grundplatte 9 ist mit dem Stössel 6 derart verbunden, dass Hin- und Herbewegungen des Stössels 6 simultan von der Grundplatte 9 nachvollzogen werden. Der Boden 5 weist entsprechend der Dicke und der Anzahl der Stifte 10 ausgebildete Bohrungen auf, damit die Stifte 10 den Boden 5 durchdringen können. Die Anordnung der Stifte 10 als "Dreibein" ist beispielhaft, je nach Anwendung kann die Anzahl von einem bis zu einer entsprechend der Anwendung benötigten Anzahl von Stiften reichen. Wie nachfolgend in der Darstellung des Verfahrens noch detailliert beschrieben wird, wird der Halter in vertikaler Richtung zurück beziehungsweise in dieser Darstellung nach unten gezogen. Da die Ausnehmung 7 den Halter 8 weitgehend aufnehmen muss, beträgt die Höhe der Ausnehmung 7 genau oder etwas mehr als die Dicke der Grundplatte 9 und die Länge der Stifte 10 minus der Dicke des Bodens 5. Weitere Einzelheiten ergeben sich bei der nachfolgenden Ausführung zu einem Teil der einzelnen Verfahrensschritte.

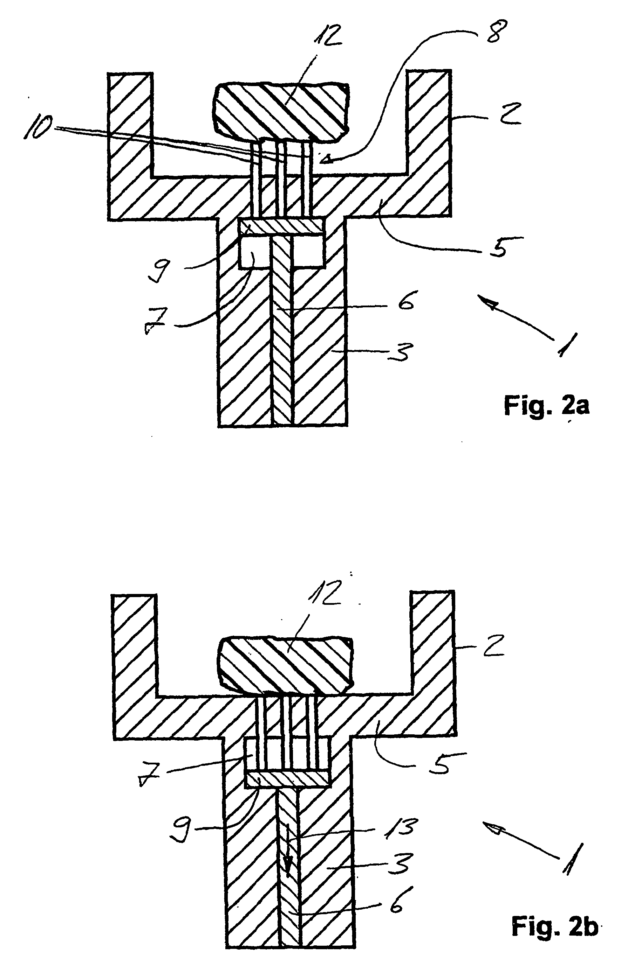

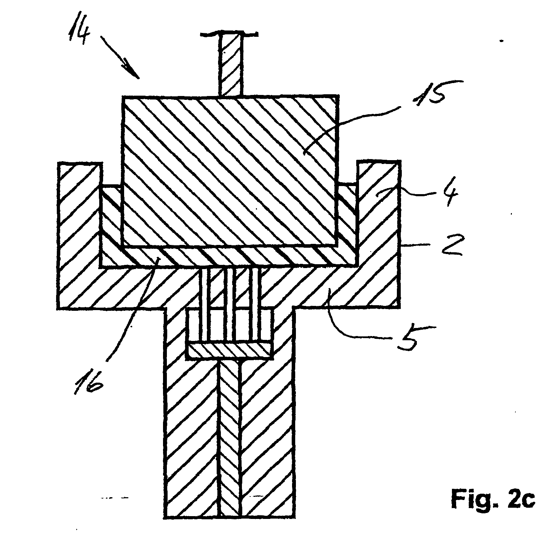

Die Figuren 2a-c zeigen einzelne Schritte des erfindungsgemässen Verfahrens anhand schematischer Schnitte.

Figur 2a zeigt die Ausgangsstellung des ersten Formpresswerkzeugs 1, bei welchem der Halter 8 bis zum Anschlag der Grundplatte 9 hochgefahren ist. Das erste Formpresswerkzeug 1 wird mit einem Wasserkreislauf (hier nicht dargestellt) auf etwa 17° Celsius herabgekühlt. Die Stifte 10 des Halters 8 durchdringen die Bohrungen im Boden 5 und stehen über diesem soweit vor, dass ein genügend grosser Abstand von den Auflagepunkten des Halters 8 zum Boden 5 des Formpresselements 1 vorhanden ist. Dadurch wird gewährleistet, dass die auf diesem Halter 8 deponierte Portion extrudierten, thermoplastischen Kunststoffs, nachfolgend das Pellet 12 genannt, sich nicht zu stark abkühlt. Dies, obwohl zwischen dem Pellet 12 und dem ersten Formpresswerkzeug 1 eine grosse Temperaturdifferenz - in diesem Beispiel etwa 160° Celsius - besteht.

Die Aufbereitung des Kunststoffes erfolgt durch eine an sich bekannte Extrudiervorrichtung. Sobald sich ein Halter 8 unter einer Extruderöffnung befindet, wird ein Pellet 12 an dieser, in den Arbeitsbereich des Drehturms hineinreichenden Extrudiervorrichtung abgeschnitten und auf den Stiften 10 des Halters 8 abgesetzt, beziehungsweise deponiert. Jede Öffnung der Extrudiervorrichtung ist gesteuert zu öffnen und zu schliessen. Der Arbeitsvorgang vom Deponieren bis zum eigentlichen Verpressen dauert rund zwei Sekunden. Da das Pellet 12 nur eine geringe Kontaktfläche mit dem doch wesentlich kälteren Halter 8 aufweist und die Verweildauer des Pellets 12 auf diesem relativ kurz ist, findet keine starke Abkühlung des Pellets 12 statt und seine Temperatur, welche bei etwa 180° Celsius liegt, bleibt bis zur eigentlichen Formpressung weitgehend erhalten.

Anschliessend wird der Stössel 6, bis die Unterkante der Grundplatte 9 am Boden der Ausnehmung 7 anstösst, in der bevorzugten Ausführungsform zurückgezogen (siehe Pfeil 13) beziehungsweise in dieser Darstellung nach unten gefahren. Der Zustand des vollkommen zurückgezogenen Halters 8 ist in der Figur 2b gezeigt. Da die Höhe der Ausnehmung 7 derart gross ist, dass die Oberkante der Stifte 10 auf oder unter der Oberkante des Bodens 5 zu liegen kommt, liegt das Pellet 12 nun ganz auf dem Boden 5 der Matrize 2 auf.

Innerhalb von Sekundenbruchteilen nachdem das Pellet 12 den Boden 5 berührt hat, erfolgt die Formpressung, wie in Figur 2c dargestellt ist. Die Zeit, während der das Pellet auf dem Boden des Werkzeugs aufliegt, beträgt also beispielsweise nur 1/5 oder weniger der Zeit, die das Pellet vom Deponieren bis zum effektiven (nachfolgend beschriebenen) Verpressen innerhalb des Frompresswerkzeugs ist. Dazu dringt das zweite Formpresswerkzeug 14, welches mit einem Wasserkreislauf (hier nicht dargestellt) auf eine Temperatur von etwa 50° Celsius vorgewärmt wurde, in das erste, gekühlte Formpresswerkzeug 1 ein. Der Stempel 15 des zweiten Formpresswerkzeugs 14 gestaltet die Innenform, welche beispielsweise der Kunststoffverschluss 16 aufweisen soll.

Bei den Temperaturangaben handelt es sich um ein Ausführungsbeispiel der Herstellung. Die Temperaturen, insbesondere der Formpresswerkzeuge 1 und 14 können je nach Anforderungen und Arbeitsablauf angepasst werden, ohne dass dies zu einer Lösung führt, welche ausserhalb dem Bereich der Erfindung liegt.

Die beiden Formpresswerkzeuge 1 und 14 verbleiben eine bis zwei Sekunden in der Formpress-Stellung und kühlen den geformten Kunststoffverschluss 16 ab. Anschliessend wird das erste Formpresswerkzeug 1 abgesenkt und vorzugsweise das zweite Formpresswerkzeug nach oben gezogen. Der Kunststoffverschluss 16 bleibt am Stempel 15 des zweiten Formpresswerkzeugs 14 haften. Mit einer Hülse (hier nicht dargestellt), welche entlang des Stempels 15 nach unten gleitet, wird der Kunststoffverschluss 16 abgestreift.

Das beschriebene Verfahren wird vorzugsweise an einem Drehturm (hier nicht dargestellt) ausgeführt. Dazu weist der Drehturm eine gesteuerte Arbeitsplattform auf, welche mit einer Vielzahl der erfindungsgemässen Vorrichtungen versehen ist. Sämtliche Bewegungen erfolgen gesteuert, wobei kurvengesteuerte Bewegungen bevorzugt sind. Die Kurvenbahnen sind so ausgeführt, dass beispielsweise folgende Bewegungsabläufe resultieren:
- der Halter 8 befindet sich bei der Aufnahme des Pellets 12 in der maximal ausgefahrenen Stellung. Sobald der eigentliche Formpressvorgang beginnt, wird der Halter 8 im ersten Formpresswerkzeug 1 zurückgezogen. Sobald das zweite Formpresswerkzeug 14 zurückgezogen wird, wird auch der Halter 8 wieder in seine Ausgangsposition gebracht. Einerseits wird der Weg der Bewegungen durch die Kurvenbahn bestimmt, andererseits kann der Halter 8 nicht weiter als bis zum Anschlag an der Unterkante des Bodens 5 beziehungsweise bis zur unteren Kante der Ausnehmung 7 bewegt werden.
- das erste Formpresswerkzeug 1 verbleibt grundsätzlich in seiner Stellung. Einzig zur Unterstützung der Freigabe des geformten Kunststoffverschlusses 16 wird das erste Formpresswerkzeug 1 am Ende des Formpressvorgangs beispielsweise leicht abgesenkt. Vorzugsweise erfolgt das Anheben des Halters 8 zur gleichen Zeit, wenn das erste Formpresswerkzeug 1 wieder in seine-Ausgangsstellung gebracht wird.
- das zweite Formpresswerkzeug 14 wird sobald als möglich nach der Deponierung des Pellets 12 abgesenkt. Eine leichte Verzögerung kann eingebaut werden, wenn infolge einer ungenauen Deponierung des Pellet 12 dieses sich zuerst noch auf dem Halter 8 zentrieren muss. Sobald sich das zweite Formpresswerkzeug senkt, wird auch der Halter 8 zurückgezogen. Nach Abschluss der Formpressung wird das zweite Formpresswerkzeug 14 zurückgezogen beziehungsweise in dieser Darstellung nach oben gezogen, während der fertig ausgestaltete Kunststoffverschluss 16 noch am Stempel 15 haftet.
- befindet sich das zweite Formpresswerkzeug 14 an seiner oberen Anschlagstellung, wird eine Hülse nach unten gefahren, welche entlang dem Stempel 15 entlangstreift und den Kunststoffverschluss 16 von dem Stempel 15 löst.

Die beschriebenen Vorgänge müssen aufeinander abgestimmt werden. Sie können eine volle Drehung - 360° - des Drehturms dauern. Werden jedoch zwei Extruderöffnungen beispielsweise entgegengesetzt angeordnet, so können diese Vorgänge auf eine Drehung des Drehturms von 180° beschränkt werden. Entsprechend dieser Überlegungen kann der benötigte Drehwinkel des Drehturms zum Abschluss eines gesamten Herstellungsvorgangs angepasst werden.

Es ist klar, dass sich die beschriebenen Ausführungsbeispiele in verschiedenen Aspekten modifizieren lassen. Insbesondere ist hervorzuheben, dass das erste Formpresswerkzeug mit dem Halter auch oben, bezogen auf die Darstellung, angeordnet sein kann. Dazu muss das Pellet jedoch solange-an dem Halter haften, bis das zweite Formpresswerkzeug in der Position ist, so dass das Pellet nicht neben dieses zweite Formpresswerkzeug fallen kann.

## Patentansprüche

1. Verfahren zum Ausformen von thermoplastischem Kunststoff zwischen einem ersten (1) und einem zweiten Formpresselement (14), wobei eine Portion (12) Rohmasse auf einem Halter (8) geringer Auflagefläche in einem Abstand zu einem Formpresselement (1) deponiert wird und erst unmittelbar vor dem Pressen beziehungsweise zu Beginn des Pressens an die Formpresselemente (1 bzw. 14) abgegeben wird, **dadurch gekennzeichnet, dass** die Auflagefläche mindestens drei punktuelle Auflagen (10) aufweist, welche durch Stifte gebildet sind, welche einen Boden (5) des Formpresselementes (1) durchdringen.

2. Verfahren nach Anspruch 1, **dadurch gekennzeichnet, dass** der Halter (8) für die Übergabe beziehungsweise Freigabe der Portion (12) in einem der beiden Formpresselemente (1, 14) versenkt wird.

3. Verfahren nach einem der Ansprüche 1 oder 2, **dadurch gekennzeichnet dass** die Portion (12) durch den Halter (8) zentriert wird.

4. Verfahren nach einem der Ansprüche 1 bis 3, **dadurch gekennzeichnet, dass** der Halter (8) gesteuert bewegt wird.

5. Vorrichtung zum Ausformen von thermoplastischem Kunststoff mit einem ersten (1) und einem zweiten Formpresselement (14), zwischen welchen eine Portion (12) thermoplastischen Kunststoffs verpresst wird, wobei ein Halter (8) geringer Auflagefläche zum vorübergehenden Abstützen der Portion (12) vor dem Kontakt mit den Formpresselementen (1 und 14) vorgesehen ist, **dadurch gekennzeichnet, dass** die Auflagefläche mindestens drei punktuelle Auflagen (10) aufweist, welche durch Stifte gebildet sind, welche einen Boden (5) des Formpresselementes (1) durchdringen.

6. Vorrichtung nach Anspruch 5, **dadurch gekennzeichnet, dass** der Halter (8) in einem der Formpresselemente (1 oder 14) versenkbar ist.

7. Vorrichtung nach einem der Ansprüche 5 oder 6, **dadurch gekennzeichnet, dass** Mittel zum zeitlich gesteuerten Bewegen des Halters (8) vorgesehen sind.

8. Vorrichtung nach einem der Ansprüche 5 bis 7, **dadurch gekennzeichnet, dass** der Halter (8) eine Mehrzahl von Stiften (10) zum zentrierten Halten der Portion (12) aufweist.

9. Vorrichtung nach einem der Ansprüche 5 bis 8, **dadurch gekennzeichnet, dass** der Halter (8) durch einen axial In einem der Formpresselemente (1 oder 14) gelagerten Stössel (6) gebildet wird und dass die Mittel zum zeitlich gesteuerten Bewegen pneumatischer Natur sind.

10. Vorrichtung nach einem der Ansprüche 5 bis 9, **dadurch gekennzeichnet, dass** die Formpresselemente (1 und 14) zum Ausformen von Kunststoffverschlüssen (16) ausgebildet sind, wobei das als Matrize (2) ausgebildete Formpresselement (1) unten angeordnet ist und den Halter (8) aufnimmt.

11. Drehturm mit mindestens einer, insbesondere mit mehreren Vorrichtungen nach einem der Ansprüche 5 bis 10.

12. Drehturm nach Anspruch 11, **dadurch gekennzeichnet, dass** die Formpresselemente kurvengesteuert sind.

## Claims

1. Method for shaping thermoplastic plastics material between a first (1) and a second (14) compression moulding element, wherein a portion (12) of raw material is deposited on a holder (8) having a small support surface at a spacing from one compression moulding element (1) and not delivered to the compression moulding elements (1 and 14, respectively,) until directly before moulding or when moulding commences, **characterised in that** the support surface comprises at least three punctual supports (10) which are formed by pins which penetrate a bottom (5) of the compression moulding element (1).

2. Method according to Claim 1, **characterised in that** the holder (8) for transferring or releasing the portion (12) is sunk in one of the two compression moulding elements (1, 14).

3. Method according to either of Claims 1 and 2, **characterised in that** the portion (12) is centred by the holder (B),

4. Method according to any one of Claims 1 to 3, **characterised in that** the holder (8) is moved in a controlled fashion.

5. Device for shaping thermoplastic plastics material, with a first (1) and a second (14) compression moulding element, between which elements a portion (12) of thermoplastic plastics material is moulded, wherein a holder (8) having a small support surface is provided for temporarily supporting the portion (12) prior to contact with the compression moulding elements (1 and 14), **characterised in that** the support surface comprises at least three punctual supports (10) which are formed by pins which penetrate a bottom (5) of the compression moulding element (1).

6. Device according to Claim 5, **characterised in that** the holder (8) can be sunk in one of the compression moulding elements (1 or 14).

7. Device according to either of Claims 5 and 6, **characterised in that** means are provided for moving the holder (8) in a time-controlled fashion.

8. Device according to any one of Claims 5 to 7, **characterised in that** the holder (8) comprises a plurality of pins (10) for retaining the portion (12) in a centred fashion.

9. Device according to any one of Claims 5 to 8, **characterised in that** the holder (8) is formed by a ram (6) which is axially mounted in one of the compression moulding elements (1 or 14), and that the means for the time-controlled movement are of the pneumatic type.

10. Device according to any one of Claims 5 to 9, **characterised in that** the compression moulding elements (1 and 14) are formed for shaping plastics closures (16), wherein the compression moulding element (1), which is formed as a female mould (2), is disposed at the bottom and accommodates the holder (8).

11. Revolving turret with at least one, in particular with a plurality of device(s) according to any one of Claims 5 to 10.

12. Revolving turret according to Claim 11, **characterised in that** the compression moulding elements are cam-controlled.

## Revendications

1. Procédé pour le formage de matières thermoplastiques entre un premier (1) et un second élément de presse de formage (14), dans lequel une portion (12) de masse brute est déposée sur un support (8) de faible surface d'appui à une certaine distance d'un élément de presse de formage (1) et ce n'est qu'immédiatement avant le pressage ou le début du pressage qu'elle est transférée aux éléments de presse de formage (1,14), **caractérisé en ce que** la surface d'appui présente au moins trois appuis ponctuels (10), qui sont formés par des goupilles qui traversent un fond (5) de l'élément de presse de formage (1).

2. Procédé selon la revendication 1, **caractérisé en ce que** le support (8) est abaissé pour le transfert ou le déchargement de la portion (12) dans l'un des deux éléments de presse de formage (1,14).

3. Procédé selon l'une des revendications 1 ou 2, **caractérisé en ce que** la portion (12) est centrée par le support (8).

4. Procédé selon l'une des revendications 1 à 3, **caractérisé en ce que** le support (8) est déplacé de façon commandée.

5. Dispositif pour le formage de matières thermoplastiques avec un premier (1) et un second élément de presse de formage (14) entre lesquels est pressée une portion (12) de matière thermoplastique, dans lequel il est prévu un support (8) de faible surface d'appui pour le soutien provisoire de la portion (12) avant le contact avec les éléments de presse de formage (1 et 14),
**caractérisé en ce que** la surface d'appui présente au moins trois appuis ponctuels (10), qui sont formés par des goupilles qui traversent un fond (5) de l'élément de pressage de forme (1).

6. Dispositif selon la revendication 5, **caractérisé en ce que** le support (8) peut être abaissé dans l'un des éléments de presse de formage (1 ou 14).

7. Dispositif selon l'une des revendications 5 ou 6, **caractérisé en ce qu'**il est prévu des moyens pour le déplacement commandé temporellement du support (8).

8. Dispositif selon l'une des revendications 5 à 7, **caractérisé en ce que** le support (8) présente une pluralité de goupilles (10) pour le support centré de la portion (12).

9. Dispositif selon l'une des revendications 5 à 8, **caractérisé en ce que** le support (8) est formé par un coulisseau (6) logé axialement dans l'un des éléments de presse de formage (1 ou 14) et **en ce que** les moyens pour le déplacement commandé latéralement sont de nature pneumatique.

10. Dispositif selon l'une des revendications 5 à 9, **caractérisé en ce que** les éléments de presse de formage (1 et 14) sont conçus pour le formage d'obturateurs en plastique (16), dans lequel l'élément de presse de formage (1) conçu sous la forme de matrice (2) est disposé vers le bas et reçoit le support (8).

11. Tour rotative avec au moins un, en particulier plusieurs dispositifs selon l'une des revendications 5 à 10.

12. Tour rotative selon la revendication 11, **caractérisée en ce que** les éléments de presse de formage sont commandés par came.
